# EUROPÄISCHE PATENTSCHRIFT

(11) **EP 4 069 134 B1**
(45) Veröffentlichungstag und Bekanntmachung des Hinweises auf die Patenterteilung: **27.12.2023**
(21) Anmeldenummer: 20800914.2
(22) Anmeldetag: 04.11.2020
(51) Int. Cl.: A61C 8/00, A61C 13/265, A61C 13/277

(54) **VERANKERUNGSVORRICHTUNG FÜR IMPLANTATGETRAGENE ZAHNPROTHESEN**
ANCHORING DEVICE FOR IMPLANT-SUPPORTED DENTURES
DISPOSITIF D'ANCRAGE POUR PROTHÈSES DENTAIRES SUPPORTÉES PAR UN IMPLANT

(30) Priorität: 04.12.2019 DE 102019008401
(43) Veröffentlichungstag der Anmeldung: 12.10.2022
(73) Patentinhaber: Hader Solutions & Distribution Ltd., Dublin 2 (IE)
(72) Erfinder: GROBECKER-KARL, Tanja, 66424 Homburg/Saar (DE)
(74) Vertreter: Dr. Gassner & Partner mbB
(86) Internationale Anmeldenummer: PCT/EP2020/080884
(87) Internationale Veröffentlichungsnummer: WO 2021/110342

(56) Entgegenhaltungen:
- WO-A1-02/24104
- WO-A2-92/02191
- DE-A1- 3 800 367
- US-A- 5 480 304
- US-A1- 2012 202 173

## Beschreibung

Die Erfindung betrifft eine Verankerungsvorrichtung für implantatgetragene Zahnprothesen gemäß dem Oberbegriff des Anspruchs 1.

Zahnärztliche Implantate sind ankylotisch mit dem Alveolarknochen verbunden, was im Vergleich zu natürlichen Zähnen mit parodontalen Strukturen eine um den Faktor 10 reduzierte Auslenkbarkeit bedingt. Aus diesem Unterschied ergeben sich mehrere Schwierigkeiten bzw. Nachteile:
- Ungenauigkeiten in der Positionsübertragung bzw. in der Herstellung von mehrgliedrigem Zahnersatz können nicht kompensiert werden;
- Zahn-Implantat-Verbundbrücken sind problematisch und zeigen schlechtere Überlebensraten;
- die Belastungssituation des Knochens ist grundsätzlich anders, da der beim Parodont etablierte hydraulische Dämpfungseffekt (Gefäßkorb) fehlt; und
- fehlende Rezeptoren resultieren in einem höheren Schwellenwert für Belastungen im Vergleich zum natürlichen Zahn.

Aus der US 5 480 304 A ist eine Vorrichtung zum Bereitstellen von Schnellkupplungen für Zahnprothesen einschließlich eines im Wesentlichen kugelförmigen männlichen Elements bekannt. Das kugelförmige Element ist mit einem Stiftelement zur festen Verbindung mit einem entfernbaren Teil der Prothese verbunden und zum Koppeln mit einem weiblichen Element geeignet. Das weibliche Element ist in Bezug auf das männliche Element komplementär geformt und wird durch einen festen Teil der Prothese bereitgestellt.

WO 02/24104 A1 offenbart eine pfeilerförmige Verbindung für Zahnprothesen umfassend einen männlichen Teil, der zur Wechselwirkung mit einem weiblichen Teil entlang von Kopplungsflächen geeignet ist und ein elastisches Element, das zwischen dem männlichen Teil und dem weiblichen Teil angeordnet sein kann, wobei das elastische Element ein anistropisches elastisches Mittel aufweist, das zur Interaktion mit dem weiblichen Teil aus einer Aussparung des männlichen Teils vorsteht.

Aus der WO 92/02191 A2 ist eine Vorrichtung zum Anbringen eines Elements als Ersatz für einen Teil eines Zahnsatzes bekannt. Die Vorrichtung umfasst einen in den Kieferknochen zu implantierenden Stift und einen daran zu befestigenden Kopplungsstift. Der Kopplungsstift und der zu implantierende Stift sind über ein Kugelgelenk miteinander verbunden. Zumindest eines der Elemente des Kugelgelenks besteht zumindest teilweise aus einem

Formgedächtnismaterial, um bei Körpertemperatur eine Schwenkbewegung des Kugelgelenks zu verhindern.

US 2012/202173 A1 zeigt Vorrichtungen zum Befestigen einer oder mehrerer Zahnprothesen in einer Weise, die das Einsetzen und Entfernen über einen Betätigungsmechanismus, wie z. B. ein Formgedächtnismaterial, von einem Verankerungsimplantat und/oder einem Abutment erleichtert.

Aus dem Stand der Technik bekannte Verankerungsvorrichtungen zeigen mehrere Ansätze, um mittels diverser Dämpfungselemente die zuvor genannten Probleme zu lösen. Hierbei handelt es sich im Einzelnen um:
- Progressive Loading von Implantaten (zunehmende okklusale Belastung, um eine Adaptation des Implantat-Knochen-Interfaces zu ermöglichen);
- Kunststoff zur Gestaltung des Kauflächenkomplexes;
- Intramobiles Zylinderelement bei IMZ-Implantaten;
- Zementieren von implantatgetragenen Restaurationen mit variabel ausgleichender Zementschicht; und
- Verwendung weicher Kunststoff-Sekundärteile als Befestigung bei abnehmbaren Prothesen.

Da diese Kompensationsmechanismen keine Vorzugsrichtung haben, sind sie in ihrer Effektivität fraglich und sind teilweise wieder aus der klinischen Praxis verschwunden.

Für die Verankerung abnehmbarer Prothesen stehen mehrere Befestigungsarten, die auch als Attachmentarten bezeichnet werden, zur Verfügung:
- Steg
- Kugelkopfanker
- Magnet
- Locator
- Teleskop (individuell gefrästes Zylinder- oder Konusteleskop / vorgefertigtes Konusteleskop).

Einzelnstehende Verankerungen (Attachments) erlauben dabei eine größere Flexibilität bei der Prothesenherstellung, da nicht optimale Implantatpositionen kompensiert werden können. Ebenso erlauben sie eine bessere Reinigung durch den Patienten. Traditionell werden mindestens zwei Implantate zur Verankerung einer Prothese benötigt. Stehen diese nicht parallel zueinander, kommt es zu verstärktem Verschleiß am Interface von einer Verankerungs-Patrize (Attachment-Patrize) und einer Verankerungs-Matrize (Attachment-Matrize).

Obwohl vorgefertigte Teleskope in Form von Konusteleskopen verfügbar sind, werden Teleskope überwiegend individuell gefräst, was deren Fertigung teuer macht. Bei Teleskopen auf natürlichen Zähnen kommt es in der initialen Tragephase zur Reduktion der Haltekraft, da sich die Zähne in die von den Teleskopen vorbestimmten Positionen bewegen. Dies passiert bei Implantaten nicht oder in nicht ausreichendem Umfang, was zu Problemen bei der Einstellung einer für den Patienten adäquaten und an allen Teleskopen gleichmäßigen Abzugskraft führt. Dieses Phänomen ist ebenfalls auf Ungenauigkeiten in der Übertragung der Implantatpositionen sowie auf deren ankylotische Fixation zurückzuführen. In im Rahmen der vorliegenden Erfindung durchgeführten in vitro Versuchen konnte gezeigt werden, dass die Abzugskraft von zwei miteinander verblockten Teleskopen geringer war, wenn diese auf resilient gelagerten Implantaten befestigt waren im Vergleich zu Situationen mit starr gelagerten Implantaten.

Weitere im Rahmen der Erfindung durchgeführte Untersuchungen und Versuche haben ergeben, dass bei starren Attachments (Verankerung) neben Belastungen durch die Deformation der Mandibula zudem die auftretende Momentbelastung der Implantate unter Kaubelastung auf den Prothesensätteln kritisch ist. Dort bieten Magnete als Verankerungselemente Vorteile, da diese zur Entkopplung von Implantat und Prothese führen. Aufgrund von Korrosionsvorgängen sowie geringer Retentionskraft haben sich Magnete jedoch nicht durchgesetzt. Vergleichbar günstig verhalten sich Resilienzteleskope, die durch einen eingearbeiteten Freiraum zwischen Primär- und Sekundärkrone über einen Ausgleichsmechanismus verfügen, aber schwierig herzustellen sind. Eine klinische Studie zeigte folglich mit Resilienzteleskopen einen geringeren Nachsorgeaufwand als bei Verwendung von Kugelkopfankern. Dass Momentbelastungen kritisch zu sehen sind, lässt sich von einer weiteren klinischen Studie ableiten, bei der zwei Implantate im Oberkiefer mit Teleskopen zur Verankerung einer Prothese verwendet wurden und im Vergleich zur Nutzung natürlicher Pfeiler deutlich schlechter abschnitten. Im Unterkiefer scheinen aufgrund der besseren Knochenqualität die klinischen Ergebnisse bei Anwendung von zwei Implantaten mit jeglichen Attachments (Verankerung) besser zu sein, d. h. der Knochen scheint die Momentbelastungen dort tolerieren zu können.

Als eine weitere bekannte, vergleichsweise neue Therapieform wird im zahnlosen Unterkiefer ein einzelnes, mittig im anterioren Bereich stehendes Implantat propagiert, welches lediglich dazu dienen soll, die Lagestabilität der Prothese zu erhöhen. Ein Schaukeln der Prothese über das Implantat muss jedoch vermieden werden. Auch hier kommen die zuvor beschriebenen Verankerungen bzw. Verankerungsvorrichtungen (Attachments) zum Einsatz. Das Implantat wird möglichst weit anterior inseriert, um nur eine Bewegungsrichtung der Prothese, nämlich ein dorsales Einsinken vorliegen zu haben. Exzentrische Implantatpositionen, wie die sonst häufig genutzte Eckzahnregion, werden vermieden, obwohl anatomische Gründe, wie das Auftreten eines neurovaskulären Kanals in der Unterkiefer-Mitte diese präferieren lassen.

Es ist daher Aufgabe der vorliegenden Erfindung, eine Verankerungsvorrichtung für abnehmbare, implantatgetragene Zahnprothesen gemäß dem Oberbegriff des Anspruchs 1 zu schaffen, die einer Überlastung des Implantates und des periimplantären Knochens vorbeugt sowie Disparallelitäten ausgleicht.

Die Lösung dieser Aufgabe erfolgt durch die Merkmale des Anspruchs 1.

Vorteilhafterweise kann durch das Vorsehen eines elastischen Verbindungselements zwischen der Verankerungs-Patrize und dem Anschluss an das Implantat eine elastische Verbindung zwischen diesen beiden Bauteilen geschaffen werden. Die Anordnung ist dabei so gewählt, dass eine vertikale Positionsänderung zwischen dem Implantat und Verankerung bzw. Prothese nicht oder zumindest kaum möglich ist, während laterale Positionsänderungen und Winkeländerungen jedoch leicht möglich sind.

Eine im Rahmen der vorliegenden Erfindung durchgeführte in vitro Studie hat gezeigt, dass die Belastungssituation des periimplantären Knochens bei Nutzung von einem oder von zwei Implantaten im Unterkiefer mit derartigen elastischen Verankerungselementen zur Prothesenretention günstiger ist als bei Verankerungen, die kein elastisches Verbindungselement zwischen Patrize und Basis aufweisen.

Insbesondere bei der zuvor erläuterten Verwendung von einem oder zwei Implantaten zur Prothesenretention kommt es zur Prothesenverschiebung unter Kaubelastung. Ein weiterer Vorteil der vorliegenden Erfindung besteht in einer, insbesondere über den Durchmesser des Verbindungselements, einstellbaren Rückstellkraft der Verankerungsvorrichtung. Diese führt bei Entlastung der Prothese zu einer Rückkehr in deren lagerkongruente Ruheposition. Ebenso können durch das Verbindungselement größere Pfeilerdisparallelitäten ausgeglichen werden, als dies bei bekannten Verankerungsvorrichtungen möglich ist.

Die Anordnung des elastischen Verbindungselements kann auf folgende Art und Weise erfolgen:
- zwischen der Basis, insbesondere deren Implantatanschlussgeometrie, und der Verankerungs-Patrize, wobei das Verbindungselement auch als separat verfügbares Produkt ausgeführt werden kann;
- die gesamte Verankerungsvorrichtung kann elastisch, insbesondere aus einer Formgedächtnislegierung, aufgebaut sein;
- das Verbindungselement kann die Verankerungs-Patrize bilden und ist mit der Implantatanschlussgeometrie der Basis verbunden.

Die Unteransprüche haben vorteilhafte Weiterbildungen der Erfindung zum Inhalt.

Insbesondere kann das Verbindungselement drahtförmig ausgebildet sein und das Material des Verbindungselements ist bei einer besonders bevorzugten Ausführungsform eine Formgedächtnislegierung. Ein besonders bevorzugtes Material für die Formgedächtnislegierung ist Nickel-Titan (NiTi).

Bei einer weiteren besonders bevorzugten Ausführungsform ist es möglich, die Rückstellkraft des Verbindungselements über unterschiedliche Durchmessergrößen des Verbindungselements einzustellen.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematisch stark vereinfachte Prinzipdarstellung einer möglichen Ausführungsform einer erfindungsgemäßen Verankerungsvorrichtung,
- Fig. 2: eine Ausführungsform der erfindungsgemäßen Verankerungsvorrichtung ohne auf einer Verankerungs-Patrize angeordnete Verankerungs-Matrize, und
- Fig. 3: eine der Figur 2 entsprechende Darstellung mit angebrachter Verankerungs-Matrize.

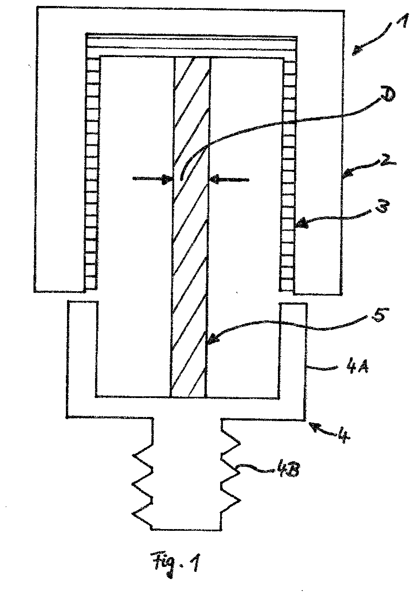

Aus der Prinzipdarstellung der Figur 1 ergibt sich der generelle Aufbau einer erfindungsgemäßen Verankerungsvorrichtung 1, die in der zahnärztlichen Terminologie auch als Attachmentsystem bezeichnet wird.

Die Verankerungsvorrichtung 1 ist für implantatgetragene, abnehmbare Zahnprothesen geeignet und weist hierfür eine Verankerungs-Matrize 2 auf, die außen auf einer Verankerungs-Patrize 3 angeordnet und aufgesteckt ist, so dass die Verankerungs-Matrize 2 vorteilhafterweise vom Träger der Zahnprothese gelöst werden kann.

Ferner weist die Verankerungsvorrichtung 1 eine Basis 4 auf, die mit einer Anschlussgeometrieanordnung 4A versehen, an die sich ein Implantat-Gewinde 4B anschließt, das vorzugsweise einstückig mit der Anschlussgeometrieanordnung 4A verbunden ist. Damit dient das Implantat-Gewinde 4B zur Befestigung der Verankerungsvorrichtung 1 im Implantat.

Erfindungsgemäß weist die Verankerungsvorrichtung 1 ferner ein elastisches Verbindungselement 5 auf, das insbesondere drahtförmig mit einem Durchmesser D ausgebildet ist und das die Verankerungs-Patrize 3 mit der Basis 4, insbesondere der Anschlussgeometrieanordnung 4A der Basis 4 elastisch verbindet.

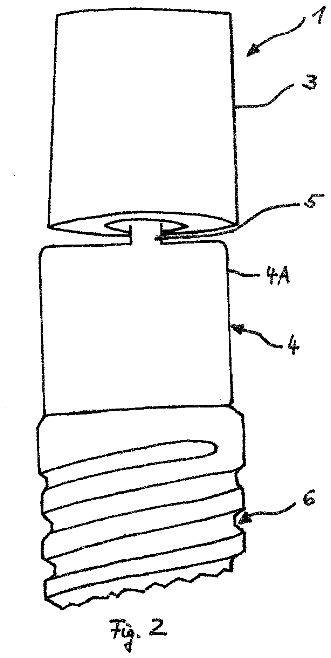

Figur 2 zeigt eine konkret verwirklichte Verankerungsvorrichtung 1 mit den zuvor anhand der Figur 1 erläuterten Komponenten, sodass in Figur 2 sämtliche Komponenten, die denjenigen der Prinzipdarstellung der Figur 1 entsprechen, mit denselben Bezugsziffern gekennzeichnet sind.

Insbesondere wird aus Figur 2 deutlich, dass das elastische Verbindungselement 5, das insbesondere aus einer Formgedächtnislegierung, beispielsweise Nickel-Titan, ausgebildet sein kann, einen Durchmesser aufweist, der deutlich geringer ist als die Durchmesser der Patrize 3 und der Basis 4, insbesondere der Anschlussgeometrieanordnung 4A.

Ferner ist in Figur 2 ein Implantat 6 dargestellt, das mit dem (in Fig. 2 nicht sichtbaren) Implantat-Gewinde 4B verbunden ist.

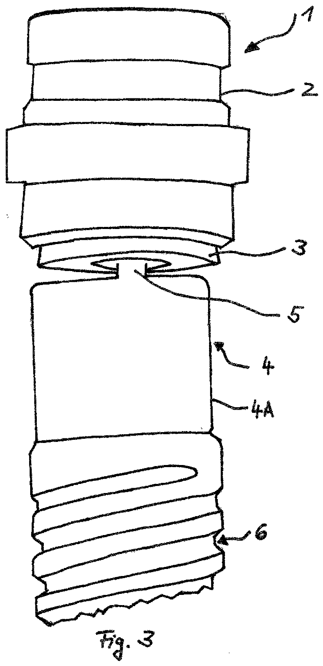

Figur 3 stellt die Verankerungsvorrichtung 1 gemäß Figur 2 dar, wobei die Verankerungs-Matrize 2 auf der Verankerungs-Patrize 3 angeordnet ist.

Bei der Ausführungsform gemäß den Figuren 1 und 2 ist die Verankerungs-Matrize 2 und die Verankerungs-Patrize 3 jeweils als Konusteleskop ausgebildet, während die Verankerungs-Matrize 2 der Prinzipdarstellung der Figur 1 als Zylinder-Sekundärteleskop ausgebildet ist, was ebenfalls auf die Verankerungs-Patrize 3 der Ausführungsform gemäß Figur 1 zutrifft.

Neben der voranstehenden schriftlichen Offenbarung wird hiermit zur Ergänzung der Offenbarung explizit auf die zeichnerische Darstellung in den Figuren 1 bis 3 Bezug genommen.

### Bezugszeichenliste

- 1: Verankerungsvorrichtung
- 2: Verankerungs-Matrize
- 3: Verankerungs-Patrize
- 4: Basis
- 4A: Anschlussgeometrieanordnung
- 4B: Implantat-Gewinde/Gewinde zur Befestigung der Verankerungsvorrichtung (Attachment) im Implantat
- 5: Verbindungselement
- 6: Implantat

- D: Durchmesser

## Patentansprüche

1. Verankerungsvorrichtung (1) für eine implantatgetragene, abnehmbare Zahnprothese
- mit einer Verankerungs-Matrize (2);
- mit einer Verankerungs-Patrize (3), die mit der Verankerungs-Matrize (2) verbunden ist; und
- mit einer Basis (4), die eine Anschlussgeometrieanordnung (4A) und ein Implantat-Gewinde (4B) zur Befestigung der Verankerungsvorrichtung (1) in einem Implantat (6) aufweist, **dadurch gekennzeichnet,**
- **dass** die Verankerungs-Patrize (3) von einem laterale Positionsänderungen und Winkeländerungen zwischen der Verankerungs-Matrize (2) und der Basis (4) erlaubenden elastischen Verbindungselement (5) gebildet ist und mit der Anschlussgeometrieanordnung (4A) der Basis (4) verbunden ist
oder die
Verankerungs-Patrize (3) und die Basis (4) über ein laterale Positionsänderungen und Winkeländerungen zwischen der Verankerungs-Matrize (2) und der Basis (4) erlaubendes elastisches Verbindungselement (5) so miteinander verbunden sind, dass eine elastische Verbindung zwischen der Verankerungs-Patrize (3) und der Basis (4) geschaffen wird, wobei das Verbindungselement (5) drahtförmig ausgebildet ist.

2. Verankerungsvorrichtung nach Anspruch 1, **dadurch gekennzeichnet, dass** das Material des Verbindungselements (5) eine Formgedächtnislegierung ist.

3. Verankerungsvorrichtung nach Anspruch 2, **dadurch gekennzeichnet, dass** die Formgedächtnislegierung Nickel-Titan ist.

4. Verankerungsvorrichtung nach einem der Ansprüche 1 bis 3, dass das Material der Verankerungs-Matrize (2), der Verankerungs-Patrize (3), der Basis (4) und des Verbindungselements (5) eine Formgedächtnislegierung ist.

5. Verankerungsvorrichtung nach Anspruch 4, **dadurch gekennzeichnet, dass** die Formgedächtnislegierung Nickel-Titan ist.

6. Verankerungsvorrichtung nach einem der Ansprüche 1 bis 5, **dadurch gekennzeichnet, dass** das Verbindungselement (5) als separat handelbares Produkt ausgebildet ist.

7. Verankerungsvorrichtung nach einem der Ansprüche 1 bis 6, **dadurch gekennzeichnet, dass** das Verbindungselement (5) einen kreisförmigen Querschnitt aufweist.

8. Verankerungsvorrichtung nach Anspruch 7, **dadurch gekennzeichnet, dass** über den Durchmesser (D) des Verbindungselements (5) eine Rückstellkraft des Verbindungselements (5) einstellbar ist.

## Claims

1. An anchoring device (1) for an implant-supported removable dental prostheses
- having a female anchoring part (2);
- having a male anchoring part (3) connected to the female anchoring part (2); and
- having a base (4) that comprises a connection geometry arrangement (4A) and an implant thread (4B) for fastening the anchoring device (1) in an implant (6), **characterized in that**
- the male anchoring part (3) is formed by an elastic connection element (5) allowing lateral changes in position and changes in angle between the female anchoring part (2) and the base (4) and is connected to the connection geometry arrangement (4A) of the base (4)
or
the male anchoring part (3) and the base (4) are interconnected by an elastic connection element (5) allowing lateral changes in position and changes in angle between the female anchoring part (2) and the base (4) so that an elastic connection is created between the male anchoring part (3) and the base (4), wherein the connection element (5) is wire-shaped.

2. The anchoring device according to claim 1, **characterized in that** the material of the connection element (5) is a shape memory alloy.

3. The anchoring device according to claim 2, **characterized in that** the shape memory alloy is nickel-titanium.

4. The anchoring device according to any one of claims 1 to 3, that the material of the female anchoring part (2), the male anchoring part (3), the base (4) and the connection element (5) is a shape memory alloy.

5. The anchoring device according to claim 4, **characterized in that** the shape memory alloy is nickel-titanium.

6. The anchoring device according to one of claims 1 to 5, **characterized in that** the connection element (5) is formed as a separately tradable product.

7. The anchoring device according to any one of claims 1 to 6, **characterized in that** the connection element (5) has a circular cross-section.

8. The anchoring device according to claim 7, **characterized in that** a restoring force of the connection element (5) can be adjusted via the diameter (D) of the connection element (5).

## Revendications

1. Dispositif d'ancrage (1) pour une prothèse dentaire amovible, portée par un implant
- avec une matrice d'ancrage (2) ;
- avec une partie mâle d'ancrage (3) qui est connecté à la matrice d'ancrage (2) ; et
- avec une base (4) qui présente un agencement de géométrie de raccord (4A) et un filetage d'implant (4B) pour la fixation du dispositif d'ancrage (1) dans un implant (6), **caractérisé en ce**
- **que** la partie mâle d'ancrage (3) est formé par un élément de connexion élastique (5) permettant des changements de position latérale et des changements angulaires entre la matrice d'ancrage (2) et la base (4), et est connecté à l'agencement de géométrie de raccord (4A) de la base (4)
ou
la partie mâle d'ancrage (3) et la base (4) sont connectés l'un à l'autre par le biais d'un élément de connexion élastique (5) permettant des changements de position latérale et des changements angulaires entre la matrice d'ancrage (2) et la base (4) de sorte qu'une connexion élastique entre la partie mâle d'ancrage (3) et la base (4) est créée, dans laquelle l'élément de connexion (5) est réalisé en forme de fil.

2. Dispositif d'ancrage selon la revendication 1, **caractérisé en ce que** le matériau de l'élément de connexion (5) est un alliage à mémoire de forme.

3. Dispositif d'ancrage selon la revendication 2, **caractérisé en ce que** l'alliage à mémoire de forme est du nickel-titane.

4. Dispositif d'ancrage selon une des revendications 1 à 3, que le matériau de la matrice d'ancrage (2), de la partie mâle d'ancrage (3), de la base (4) et de l'élément de connexion (5) est un alliage à mémoire de forme.

5. Dispositif d'ancrage selon la revendication 4, **caractérisé en ce que** l'alliage à mémoire de forme est du nickel-titane.

6. Dispositif d'ancrage selon une des revendications 1 à 5, **caractérisé en ce que** l'élément de connexion (5) est réalisé en tant que produit commercialisable séparément.

7. Dispositif d'ancrage selon une des revendications 1 à 6, **caractérisé en ce que** l'élément de connexion (5) présente une section transversale circulaire.

8. Dispositif d'ancrage selon la revendication 7, **caractérisé en ce qu'**une force de rappel de l'élément de connexion (5) peut être réglée par le biais du diamètre (D) de l'élément de connexion (5).
